# EUROPEAN PATENT SPECIFICATION

(11) **EP 3 323 841 B1**
(45) Date of publication and mention of the grant of the patent: **22.04.2020**
(21) Application number: 16872237.9
(22) Date of filing: 21.10.2016
(51) Int. Cl.: C08F 222/14, C08F 236/08, C08F 220/32, C08L 35/02, C08K 13/02, C08K 3/22, C08K 5/09, C08K 3/06, C08K 3/36

(54) **WHITE CARBON BLACK/POLY(ITACONATE-ISOPRENE-GLYCIDYL METHACRYLATE) BIO-BASED ELASTOMER COMPOSITE MATERIAL FREE OF SILANE COUPLING AGENT, AND PREPARATION METHOD THEREFOR**
BIOBASIERTER ELASTOMERVERBUNDSTOFF OHNE SILANKUPPLER AUS WEISSRUSS/POLY(ITACONAT-ISOPREN-GLYCIDYLMETHACRYLAT) UND HERSTELLUNGSVERFAHREN DAFÜR
MATÉRIAU COMPOSITE ÉLASTOMÈRE BIOSOURCÉ DE NOIR DE CARBONE BLANC/POLY(ITACONATE-ISOPRÈNE-MÉTHACRYLATE DE GLYCIDYLE) EXEMPT D'AGENT DE COUPLAGE SILANE ET PROCÉDÉ DE PRÉPARATION S'Y RAPPORTANT

(30) Priority: 10.12.2015 CN 201510908543
(43) Date of publication of application: 23.05.2018
(73) Proprietor: Beijing University Of Chemical Technology, Beijing 100029 (CN)
(72) Inventor: ZHANG, Liqun, Beijing 100029 (CN); QIAO, He, Beijing 100029 (CN); WANG, Runguo, Beijing 100029 (CN); XU, Wenji, Beijing 100029 (CN); LEI, Weiwei, Beijing 100029 (CN); ZHOU, Xinxin, Beijing 100029 (CN); CHAO, Mingyuan, Beijing 100029 (CN)
(74) Representative: Sun, Yiming
(86) International application number: PCT/CN2016/102900
(87) International publication number: WO 2017/097043

(56) References cited:
- EP-A1- 1 874 864
- WO-A1-2015/075971
- CN-A- 1 665 870
- CN-A- 102 558 578
- CN-A- 103 224 632
- CN-A- 103 951 924
- CN-A- 104 725 756
- CN-A- 104 945 817
- CN-A- 105 622 841
- CN-B- 102 558 437
- CN-B- 103 224 632
- JP-A- H03 277 602
- US-A- 4 094 831
- US-A1- 2012 282 836

## Description

### TECHNICAL FIELD

The present disclosure relates to a bio-based elastomer nanocomposite, and its preparation method especially involves preparation for environment protecting rubber which improves the mechanical property and wet-skid resistance as well as lowers the rolling resistance. Moreover, this method can improve the dispersion of silica without using silane coupling agents and no VOC emission during the preparation process.

### BACKGROUND

Rubber as one of the basic industries occupies a pivotal position in the national economy. Traditional rubber can be divided into natural rubber and synthetic rubber. For now, natural rubber is facing the problem of small planting area and harsh growth conditions; and synthetic rubber most comes from petrochemical resources. However, petrochemical resources lack and are polluted. Therefore, preparing a new kind of rubber that satisfies the performance of traditional rubber and solves the problem traditional rubber faced is an important development direction of rubber area. Bio-based Engineering Elastomer is disclosed by Zhang Liqun research group, Beijing University of Chemical Technology under this background. The raw material of bio-based engineering elastomer does not rely on petrochemical resources, it can be synthesized by using traditional rubber processing technologies, and the product has better environmental stability.

Due to its molecular structure, rubber has high elasticity but bad mechanical strength. Normally, the filler is needed to improve its mechanical strength to make full use of value. The most used fillers in rubber area are carbon black and silica. In this instance, production of silica does not rely on mechanical strength, compared with carbon black, and rubber filled by silica has better wet-skid resistance and lower rolling resistance. But silica has a lot of "-OH" on its surface, filler flocculation easily occurs, and bad dispersion effect influences the performance of rubber product filled by silica. Currently, silane coupling agent is used in rubber industry to improve dispersion effect of silica and interfacial interaction between rubber and silica. Rubber filled with silane coupling agent needs heating treatment; it not only increases the manufacturing cost but also makes the rubber processing technologies more complex. Moreover, VOC is generated during manufacture process of rubber nanocomposite, such as methanol and ethanol which are harmful to the environment.

Poly (itaconate-ter-isoprene-ter-glycidyl methacrylate) is a new kind of environment-friendly bio-based elastomer, and it takes itaconic acid, alcohol, and isoprene as raw materials. These raw materials can be prepared by biological fermentation. Poly (itaconate-ter-isoprene-ter-glycidyl methacrylate) contains a lot of ester groups and epoxy functional group; ester groups form a hydrogen bond with silica surface to improve the dispersion effect of silica. Ring-opening crosslinking is occurred between epoxy functional group and "-OH" on silica surface, and it improves the dispersion effect of silica in elastomer and interfacial interaction between silica and rubber elastomer greatly and improves the mechanical property and wet-skid resistance as well as lower the rolling resistance of rubber product, while at the same time it simplifies manufacture process without using silane coupling agent. There are also no VOC emissions too. Therefore, silica/poly (itaconate-ter-isoprene-ter-glycidyl methacrylate) bio-based elastomer nanocomposite is a kind of promising "green tire" rubber material.

CN 103 224 632 B discloses a poly(itaconate/isoprene)bio-based elastomer/layered silicate nanocomposite material preparation method. A poly(itaconate/isoprene)bio-based elastomer/layered silicate nanocomposite material is obtained through wet compounding of a poly(itaconate/isoprene)bio-based elastomer and layered silicate, and chemical cross-linking. The layered silicate/poly(itaconate/isoprene)bio-based elastomer nanocomposite material is a novel environmentally-friendly composite material, and the filling of layered silicate can reduce the rubber cost, so the composite material is an airtight green rubber product having a very good prospect. The material prepared has an environmental protection property and a gas barrier performance, and the gas permeation coefficient of the poly(itaconate/isoprene)bio-based elastomer/layered silicate nanocomposite material is 1.7-10.4×10⁻¹⁷m²s-¹Pa⁻¹. 20-50 parts by mass of combined reinforcing agents comprising white carbon black (SiO₂) or carbon black, and the like can be added to improve the strength of the composite material.

CN 102 558 437 B discloses a method for preparing itaconic ester/isoprene copolymer type bio-based engineering elastomer through low temperature emulsion polymerization. The method is initiated by a redox initiation system, and the itaconic ester/isoprene copolymer type bio-based engineering elastomer is prepared through emulsion polymerization under a low temperature (minus 10 to 30 DEG C) condition. The prepared itaconic ester/isoprene copolymer type bio-based engineering elastomer has high molecular weight, wherein the number-average molecular weight of the itaconic ester/isoprene copolymer type bio-based engineering elastomer is 145200 to 705678, and the weight-average molecular weight of the itaconic ester/isoprene copolymer type bio-based engineering elastomer ranges from 290400 to 2540440. The method has the advantages that the itaconic ester/isoprene copolymer type bio-based engineering elastomer does not need to be pressurized in a copolymerized reaction in which isoprene participates in, the energy consumption is low and the process is simple; and the method is very suitable for industrial production.

CN 103 951 924 A discloses an itaconate based bioengineering rubber damping material and a preparation method thereof, and particularly relates to a phenol organic micromolecule-containing itaconate based bioengineering rubber damping material and a preparation method thereof. The obtained bio-based rubber damping material has a good damping property by adding selected phenolic hydroxyl group-containing organic micromolecule damping function additive to a synthesized copolymer type bioengineering crude rubber. The values of a loss angle tangent (tan delta) and a loss factor (eta) of the damping material are increased; the using temperature range of the material is expanded.

CN 104 945 817 A discloses itaconate/butadiene copolymer type bioengineering rubber and a preparation method thereof, and belongs to the field of bioengineering rubber. The bioengineering rubber is formed by performing chemical crosslinking on a copolymer formed through emulsion polymerization of itaconate and butadiene, the number-average molecular weight of the itaconate/butadiene copolymer is 53000-1640000, and the weight-average molecular weight of the itaconate/butadiene copolymer is 110000-2892000. The preparation method comprises the following steps: an itaconate monomer and butadiene are subjected to emulsion polymerization to prepare the itaconate/butadiene copolymer; then, the itaconate/butadiene copolymer is subjected to the chemical crosslinking to prepare the bioengineering rubber, wherein the chemical crosslinking process can be implemented by adding a traditional sulfuration/accelerant sulfuration system. The bioengineering rubber is high in molecular weight and low in glass-transition temperature, can be sulfurized by the sulfuration/accelerant sulfuration system, is enabled to have the physical and mechanical properties and processing performance equivalent to those of the conventional synthetic rubber, and can meet the requirements for engineering application such as tire treads and conveyor belts.

WO 2015/075971 A1 discloses a rubber composition that shows a balanced improvement in fuel economy, abrasion resistance, and wet grip performance while having good processability, and a pneumatic tire including a tread formed from the rubber composition. Disclosed is a rubber composition containing: a copolymer synthesized by copolymerization of a conjugated diene monomer and a compound represented by the formula (1) below; and carbon black and/or silica, wherein R 11 and R 12 are the same as or different from each other and each represent a hydrogen atom or a C1-C30 hydrocarbon group.

US 4 094 831 A discloses the improvement of the green strength of synthetic elastomers by forming interpolymers from at least one type of various synthetic elastomer forming monomers with an epoxy containing monomer having the formula: where R1 contains from 0 to 8 carbon atoms and R2 contains from 1 to 4 carbon atoms. Typical elastomer forming monomers include at least one conjugated diene having from 4 to 10 carbon atoms, olefins having from 2 to 14 carbon atoms along with a diene having from 4 to 6 carbon atoms, and combinations thereof. The interpolymer preferably is blended with synthetic elastomers or natural rubber (cis-1,4-polyisoprene) and utilized for various industrial uses such as tire carcasses including radial truck tire carcasses. The green strength is further improved if a small amount of an epoxy cross-linking agent is utilized. Examples of suitable cross-linking agents include monoamines and polyamines, monoanhydrides and polyanhydrides, and monocarboxylic acids, as well as polycarboxylic acids. Desirably, the interpolymer of the synthetic elastomer forming monomer and the epoxy containing monomer is blended with various types of synthetic elastomers or natural rubber in the presence of an epoxy cross-linking agent in a suitable mixing vessel such as a Banbury.

### SUMMARY

The present disclosure discloses a preparation method of bio-based silica/poly (itaconate-ter-isoprene-ter-glycidyl methacrylate) nanocomposite. Glycidyl methacrylate is added to improve the dispersion of silica. It improves the mechanical property and wet-skid resistance as well as lower the rolling resistance of rubber product, it simplifies manufacture process and no VOC emissions.

The present disclosure discloses a preparation method of glycidyl methacrylate-functionalized bio-based elastomer /poly (itaconate-ter-isoprene-ter-glycidyl methacrylate), it is mixed with silica to prepare silica/poly (itaconate-ter-isoprene-ter-glycidyl methacrylate) bio-based elastomer nanocomposite. The manufacturing process can be finished without silane coupling agent.

The specific preparation conditions and procedures are as follows:
A: Preparation of poly (itaconate-ter-isoprene-ter-glycidyl methacrylate) bio-based elastomer.

Firstly, mix at least 30 wt.% itaconate, at least 10 wt.% isoprene and 0.5 to 20 wt.% glycidyl methacrylate (itaconate, isoprene, and glycidyl methacrylate are monomers, total wt. of the all three is 100%), add deionized water with 50-500% wt. of total monomer as dispersant, add 0.5 to 10% emulsifier, 0 to 5% chelating agent, 0.01 to 5% reductant, 0.01 to 5% second reductant and 0.01 to 5% initiator, performing reaction for 6-72 hours under 5 to 30°C to obtain poly (itaconate-ter-isoprene-ter-glycidyl methacrylate) emulsion, after demulsification and desiccation by flocculant, poly (itaconate-ter-isoprene-ter-glycidyl methacrylate) flocculent gel is obtained, poly (itaconate-ter-isoprene-ter-glycidyl methacrylate) flocculent gel is purified by soaking in ethanol and water successively, after drying 24 hours in air-circulating oven at 60°C, poly (itaconate-ter-isoprene-ter-glycidyl methacrylate) bio-based elastomer is obtained.

The itaconate mentioned above comprises dimethyl itaconate, diethyl itaconate, dipropyl itaconate, diisopropyl itaconate, dibutyl itaconate, diisobutyl itaconate, dipentyl itaconate, diisoamyl itaconate, dihexyl itaconate, diheptyl phthalate itaconate and dioctyl phthalate itaconate.

The emulsifier mentioned above comprises at least one of potassium oleate, sodium oleate, disproportionated potassium rosin, disproportionated rosin sodium, sodium dodecyl sulfonate, sodium dodecyl benzene sulfonate, lauryl sodium sulfate, ammonium nonylphenol polyoxyethylene ether sulfate (CO436) or a mix of them.

The reductant is EDTA-FeNa or ferrous sulfate.

The second reductant is sodium formaldehyde sulfoxylate or polyvinyl polyamide.

The chelating agent comprises EDTA-2Na, EDTA-4Na, EDTA-Fe·Na.

The initiator is tert-butyl hydroperoxide dicumyl peroxide or p-menthane hydroperoxide (PMHP).

The flocculant is calcium chloride water solution with a mass concentration of 1 to 10%, 1 to 10% sodium chloride water solution, 1 to 5% hydrochloric acid water solution, 1 to 5% sulfuric acid water solution, ethanol or methanol.

B: Preparation of silica/poly (itaconate-ter-isoprene-ter-glycidyl methacrylate) bio-based elastomer nanocomposite.

Take 100 mass phr of poly (itaconate-ter-isoprene-ter-glycidyl methacrylate) bio-based elastomer to react with over 10 phr of silica, 0.5 to 3.0 phr of Sulphur, 0.5 to 3.0 phr of anti-ager, 0.5 to 10.0 phr of ZnO, 0.5 to 5 phr of stearic acid, 0.5 to 5 phr of accelerator, 0 to 30 phr other fillers, they are mixed through open mill or internal mixer, then silica/poly (itaconate-ter-isoprene-ter-glycidyl methacrylate) bio-based elastomer nanocomposite Is prepared through moldings curing at 130 to 170°C.

The silica is highly dispersed such as VN3 or 833MP.

The anti-ager comprises antioxidant N-Isopropyl-N'-phenyl-p-phenylenediamine (4010NA) and antioxidant N-(1,3-dimethylbutyl)-n-phenyl-p-phenylenediamine (4020).

The accelerator comprises 2-mercaptobenzothiazole (accelerator M) and N-cyclohexyl-2-benzothiazole sulfonamide (accelerator CZ).

The other fillers comprise paraffin and distillate aromatic extract (DAE).

### Beneficial effects of the present disclosure

Compared with bio-based elastomer without adding glycidyl methacrylatesynthesized under the same condition, silica/poly (itaconate-ter-isoprene-ter-glycidyl methacrylate) bio-based elastomer nanocomposite have following beneficial effects.

Dispersion and mechanical strength of silica are improved obviously; rolling resistance of rubber is lower; wet-skid resistance is improved; the manufacturing process can be finished without silane coupling agent; manufacture process is simple; it is a kind of promising "green tire" rubber material.

### DETAILED DESCRIPTION OF THE PREFERRED EMBODIMENTS

### Embodiment 1

The experimental device is equipped with mechanical agitation, nitrogen access, thermometer, and condenser. At 5°C and under nitrogen protection,150g deionized water, 5g potassium oleate, 0.5g ferrous sulfate, 0.1g EDTA-4Na, 2g sodium sulfoxylate formaldehyde, 60g diethyl itaconate, 30g isoprene, 10g glycidyl methacrylate are added into the device with 400r/min agitation. After 1 hour, add 0.1g initiator cumyl hydroperoxide to initiate polymerization, stirring rate is decreased to 200r/min, react for 10 hours to get poly (diethyl itaconate-ter-isoprene-ter-glycidyl methacrylate) latex, the latex is poured into 2wt% NaCl to proceed demulsification flocculation, poly (diethyl itaconate-ter-isoprene-ter-glycidyl methacrylate) flocculent gel is obtained. The obtained flocculent gel is purified by soaking in ethanol and water successively and drying for 24 hours in an air-circulating oven at 60°C, and poly (diethyl itaconate-ter-isoprene-ter-glycidyl methacrylate) bio-based elastomer is obtained.

100g poly (diethyl itaconate-ter-isoprene-ter-glycidyl methacrylate) bio-based elastomer, 50g high dispersion silica 833MP,1g paraffin, 3g zinc oxide, 1g stearic acid, 2g anti-ager 4010NA, 2g accelerator CZ, 1g accelerator M, 1.5g sulfur are mixed homogeneously to produce rubber compound by using the double-roller open mill. Silica/poly (diethyl itaconate-ter-isoprene-ter-glycidyl methacrylate) nanocomposite is got by mold curing of rubber compound at 150°C.

### Embodiment 2

The experimental device is equipped with mechanical agitation, nitrogen access, thermometer, and condenser. At 10°C and under nitrogen protection, 300g deionized water, 3.5g disproportionated potassium rosinate, 1.5g potassium oleate, 0.05g ferrous sulfate, 0.1g EDTA-4Na, 0.2g sodium sulfoxylate formaldehyde, 78g dipropyl itaconate, 20g isoprene, 2g glycidyl methacrylate are added into the device with 400r/min agitation. After 1 hour, add 0.07g initiator hydrogen peroxide p-menthane to initiate polymerization, stirring rate is decreased to 200r/min, react for 18 hours to get poly (dipropyl itaconate-ter-isoprene-ter-glycidyl methacrylate) latex, the latex is poured into 1wt% CaCl₂ to proceed demulsification flocculation, poly (dipropyl itaconate-ter-isoprene-ter-glycidyl methacrylate) flocculent gel is obtained. The obtained flocculent gel is purified by soaking in ethanol and water successively and drying for 24 hours in an air-circulating oven at 60°C, and poly (dipropyl itaconate-ter-isoprene-ter-glycidyl methacrylate) bio-based elastomer is obtained.

100g poly (dipropyl itaconate-ter-isoprene-ter-glycidyl methacrylate) bio-based elastomer, 40g high dispersion silica VN3,1g paraffin, 5g zinc oxide, 1g stearic acid, 1.5g anti-ager 4020, 1g accelerator M and 1g accelerator CZ, 1.5g sulfur are mixed homogeneously to produce rubber compound by using the double-roller open mill. Silica/poly (dipropyl itaconate-ter-isoprene-ter-glycidyl methacrylate) nanocomposite is got by mold curing of rubber compound at 150°C.

### Embodiment 3

The experimental device is equipped with mechanical agitation, nitrogen access, thermometer, and condenser. At 20°C and under nitrogen protection, 250g deionized water, 2.5g sodium dodecyl benzene sulfonate, 0.04g EDTA-FeNa, 0.2g sodium sulfoxylate formaldehyde, 65g dibutyl itaconate, 30g isoprene, 5g glycidyl methacrylate are added into the device with 400r/min agitation. After 1 hour, add 0.05g initiator tertbutyl hydroperoxide to initiate polymerization, stirring rate is decreased to 200r/min, react for 12 hours to get poly (dibutyl itaconate-ter-isoprene-ter-glycidyl methacrylate) latex, the latex is poured into ethanol to proceed demulsification flocculation, poly (dibutyl itaconate-ter-isoprene-ter-glycidyl methacrylate) flocculent gel is obtained. The obtained flocculent gel is purified by soaking in ethanol and water successively and drying for 24 hours in an air-circulating oven at 60°C, and poly (dibutyl itaconate-ter-isoprene-ter-glycidyl methacrylate) bio-based elastomer is obtained.

100g poly (dibutyl itaconate-ter-isoprene-ter-glycidyl methacrylate) bio-based elastomer, 50g high dispersion silica VN3, 5g zinc oxide, 0.5g stearic acid, 1g anti-ager 4010A, 1g accelerator CZ and 0.7g accelerator M, 1g sulfur are mixed homogeneously to produce rubber compound by using the double-roller open mill. Silica/poly (dibutyl itaconate-ter-isoprene-ter-glycidyl methacrylate) nanocomposite is got by mold curing of rubber compound at 150°C.

### Embodiment 4

The experimental device is equipped with mechanical agitation, nitrogen access, thermometer, and condenser. At 25°C and under nitrogen protection, 400g deionized water, 5g sodium dodecyl benzene sulfonate, 0.05g EDTA-FeNa, 0.2g sodium sulfoxylate formaldehyde, 67g diisoamyl itaconate, 30g isoprene, 3g glycidyl methacrylate are added into the device with 400r/min agitation. After 1 hour, add 0.05g initiator tertbutyl hydroperoxide to initiate polymerization, stirring rate is decreased to 200r/min, react for 24 hours to get poly (diisoamyl itaconate-ter-isoprene-ter-glycidyl methacrylate) latex, the latex is poured into methanol to proceed demulsification flocculation, poly (diisoamyl itaconate-ter-isoprene-ter-glycidyl methacrylate) flocculent gel is obtained. The obtained flocculent gel is purified by soaking in ethanol and water successively and drying for 24 hours in an air-circulating oven at 60°C, and poly (diisoamyl itaconate-ter-isoprene-ter-glycidyl methacrylate) bio-based elastomer is obtained.

100g poly (diisoamyl itaconate-ter-isoprene-ter-glycidyl methacrylate) bio-based elastomer, 70g high dispersion silica 833MP, 5g zinc oxide, 1g stearic acid, 2g anti-ager 4020, 1g accelerator CZ and 1g accelerator M, 1g sulfur are mixed homogeneously to produce rubber compound by using an internal mixer. Silica/poly (diisoamyl itaconate-ter-isoprene-ter-glycidyl methacrylate) nanocomposite is got by mold curing of rubber compound at 150°C.

### Embodiment 5

The experimental device is equipped with mechanical agitation, nitrogen access, thermometer, and condenser. At 30°C and under nitrogen protection, 300g deionized water, 2g sodium dodecyl benzene sulfonate, 2g CO436, 0.1g EDTA-FeNa, 0.5g sodium sulfoxylate formaldehyde, 55g dihexyl itaconate, 40g isoprene, 5g glycidyl methacrylate are added into the device with 400r/min agitation. After 1 hour, add 0.1g initiator cumyl hydroperoxide to initiate polymerization, stirring rate is decreased to 200r/min, react for 20 hours to get poly (dihexyl itaconate-ter-isoprene-ter-glycidyl methacrylate) latex, the latex is poured into 1wt% HCI to proceed demulsification flocculation, poly (dihexyl itaconate-ter-isoprene-ter-glycidyl methacrylate) flocculent gel is obtained. The obtained flocculent gel is purified by soaking in ethanol and water successively and drying for 24 hours in an air-circulating oven at 60°C, and poly (dihexyl itaconate-ter-isoprene-ter-glycidyl methacrylate) bio-based elastomer is obtained.

100g poly (dihexyl itaconate-ter-isoprene-ter-glycidyl methacrylate) bio-based elastomer, 70g high dispersion silica 833MP, 6g zinc oxide, 1g stearic acid, 0.5g anti-ager 4010NA, 2g accelerator CZ and 1g accelerator M, 1.5g sulfur are mixed homogeneously to produce rubber compound by using an internal mixer. Silica/poly (dihexyl itaconate-ter-isoprene-ter-glycidyl methacrylate) nanocomposite is got by mold curing of rubber compound at 150°C.

### Comparison 1

The experimental device is equipped with mechanical agitation, nitrogen access, thermometer, and condenser. At 5°C and under nitrogen protection,150g deionized water, 5g potassium oleate, 0.5g ferrous sulfate, 0.1g EDTA-4Na, 2g sodium sulfoxylate formaldehyde, 70g diethyl itaconate, 30g isoprene are added into the device with 400r/min agitation. After 1 hour, add 0.1g initiator cumyl hydroperoxide to initiate polymerization, stirring rate is decreased to 200r/min, react for 10 hours to get poly (diethyl itaconate-ter-isoprene) latex, the latex is poured into 2wt% NaCl to proceed demulsification flocculation, poly (diethyl itaconate-ter-isoprene) flocculent gel is obtained. The obtained flocculent gel is purified by soaking in ethanol and water successively and drying for 24 hours in an air-circulating oven at 60°C, and poly (diethyl itaconate-ter-isoprene) bio-based elastomer is obtained.

100g poly (diethyl itaconate-ter-isopren) bio-based elastomer, 50g high dispersion silica 833MP,1g paraffin, 3g zinc oxide, 1g stearic acid, 2g anti-ager 4010NA, 2g accelerator CZ, 1g accelerator M, 1.5g sulfur are mixed homogeneously to produce rubber compound by using the double-roller open mill. Silica/poly (diethyl itaconate-ter-isoprene) nanocomposite is got by mold curing of rubber compound at 150°C.

### Comparison 2

The experimental device is equipped with mechanical agitation, nitrogen access, thermometer, and condenser. At 10°C and under nitrogen protection, 300g deionized water, 3.5g disproportionated potassium rosinate, 1.5g potassium oleate, 0.05g ferrous sulfate, 0.1g EDTA-4Na, 0.2g sodium sulfoxylate formaldehyde, 80g dipropyl itaconate, 20g isoprene are added into the device with 400r/min agitation. After 1 hour, add 0.07g initiator hydrogen peroxide p-menthane to initiate polymerization, stirring rate is decreased to 200r/min, react for 18 hours to get poly (dipropyl itaconate-ter-isoprene) latex, the latex is poured into 1wt% CaCl₂ to proceed demulsification flocculation, poly (dipropyl itaconate-ter-isoprene) flocculent gel is obtained. The obtained flocculent gel is purified by soaking in ethanol and water successively and drying for 24 hours in an air-circulating oven at 60°C, and poly (dipropyl itaconate-ter-isoprene) bio-based elastomer is obtained.

100g poly (dipropyl itaconate-ter-isoprene) bio-based elastomer, 40g high dispersion silica VN3, 5g zinc oxide, 1g stearic acid, 1.5g anti-ager 4020, 1g accelerator CZ and 1g accelerator M, 1.5g sulfur are mixed homogeneously to produce rubber compound by using the double-roller open mill. Silica/poly (dipropyl itaconate-ter-isoprene) nanocomposite is got by mold curing of rubber compound at 150°C.

### Comparison 3

The experimental device is equipped with mechanical agitation, nitrogen access, thermometer and condenser. At 20°C and under nitrogen protection, 250g deionized water, 2.5g sodium dodecyl benzene sulfonate, 0.04g EDTA-FeNa, 0.2g sodium sulfoxylate formaldehyde, 70g dibutyl itaconate, 30g isoprene are added into the device with 400r/min agitation. After 1 hour, add 0.05g initiator tertbutyl hydroperoxide to initiate polymerization, stirring rate is decreased to 200r/min, react for 12 hours to get poly (dibutyl itaconate-ter-isoprene) latex, the latex is poured into ethanol to proceed demulsification flocculation, poly (dibutyl itaconate-ter-isoprene) flocculent gel is obtained. The obtained flocculent gel is purified by soaking in ethanol and water successively and drying for 24 hours in an air-circulating oven at 60°C, and poly (dibutyl itaconate-ter-isoprene) bio-based elastomer is obtained.

100g poly (dibutyl itaconate-ter-isoprene) bio-based elastomer, 50g high dispersion silica VN3, 5g zinc oxide, 0.5g stearic acid, 1g anti-ager 4010A, 1g accelerator CZ and 0.7g accelerator M, 1g sulfur are mixed homogeneously to produce rubber compound by using the double-roller open mill. Silica/poly (dibutyl itaconate-ter-isoprene) nanocomposite is got by mold curing of rubber compound at 150°C.

### Comparison 4

The experimental device is equipped with mechanical agitation, nitrogen access, thermometer, and condenser. At 25°C and under nitrogen protection, 400g deionized water, 5g sodium dodecyl benzene sulfonate, 0.05g EDTA-FeNa, 0.2g sodium sulfoxylate formaldehyde, 70g diisoamyl itaconate, 30g isoprene are added into the device with 400r/min agitation. After 1 hour, add 0.05g initiator tertbutyl hydroperoxide to initiate polymerization, stirring rate is decreased to 200r/min, react for 24 hours to get poly (diisoamyl itaconate-ter-isoprene) latex, the latex is poured into methanol to proceed demulsification flocculation, poly (diisoamyl itaconate-ter-isoprene) flocculent gel is obtained. The obtained flocculent gel is purified by soaking in ethanol and water successively and drying for 24 hours in an air-circulating oven at 60°C, and poly (diisoamyl itaconate-ter-isoprene) bio-based elastomer is obtained.

100g poly (diisoamyl itaconate-ter-isoprene) bio-based elastomer, 70g high dispersion silica 833MP, 5g zinc oxide, 1g stearic acid, 2g anti-ager 4020, 1g accelerator CZ and 1g accelerator M, 1g sulfur are mixed homogeneously to produce rubber compound by using an internal mixer. Silica/poly (diisoamyl itaconate-ter-isoprene) nanocomposite is got by mold curing of rubber compound at 150°C.

### Comparison 5

The experimental device is equipped with mechanical agitation, nitrogen access, thermometer, and condenser. At 30°C and under nitrogen protection, 300g deionized water, 2g sodium dodecyl benzene sulfonate, 2g CO436, 0.1g EDTA-FeNa, 0.5g sodium sulfoxylate formaldehyde, 60g dihexyl itaconate, 40g isoprene are added into the device with 400r/min agitation. After 1 hour, add 0.1g initiator cumyl hydroperoxide to initiate polymerization, stirring rate is decreased to 200r/min, react for 20 hours to get poly (dihexyl itaconate-ter-isoprene) latex, the latex is poured into 1wt% HCI to proceed demulsification flocculation, poly (dihexyl itaconate-ter-isoprene) flocculent gel is obtained. The obtained flocculent gel is purified by soaking in ethanol and water successively and drying for 24 hours in an air-circulating oven at 60°C, and poly (dihexyl itaconate-ter-isoprene) bio-based elastomer is obtained.

100g poly (dihexyl itaconate-ter-isoprene) bio-based elastomer, 70g high dispersion silica 833MP, 6g zinc oxide, 1g stearic acid, 0.5g anti-ager 4010NA, 2g accelerator CZ and 1g accelerator M, 1.5g sulfur are mixed homogeneously to produce rubber compound by using an internal mixer. Silica/poly (dihexyl itaconate-ter-isoprene) nanocomposite is got by mold curing of rubber compound at 150°C.

### Comparison 6

The experimental device is equipped with mechanical agitation, nitrogen access, thermometer, and condenser. At 20°C and under nitrogen protection, 250g deionized water, 2.5g sodium dodecyl benzene sulfonate, 0.04g EDTA-FeNa, 0.2g sodium sulfoxylate formaldehyde, 70g dibutyl itaconate, 30g isoprene are added into the device with 400r/min agitation. After 1 hour, add 0.05g initiator tertbutyl hydroperoxide to initiate polymerization, stirring rate is decreased to 200r/min, react for 12 hours to get poly (dibutyl itaconate-ter-isoprene) latex, the latex is poured into ethanol to proceed demulsification flocculation, poly (dibutyl itaconate-ter-isoprene) flocculent gel is obtained. The obtained flocculent gel is purified by soaking in ethanol and water successively and drying for 24 hours in an air-circulating oven at 60°C, and poly (dibutyl itaconate-ter-isoprene) bio-based elastomer is obtained.

100g poly (dibutyl itaconate-ter-isoprene) bio-based elastomer, 50g high dispersion silica VN3, 5g silane coupling agent TESPT, 5g zinc oxide, 0.5g stearic acid, 1g anti-ager 4010A, 1g accelerator CZ and 0.7g accelerator M, 1g sulfur are mixed homogeneously to produce rubber compound by using an internal mixer. Silica/poly (dibutyl itaconate-ter-isoprene) nanocomposite is got by mold curing of rubber compound at 150°C.

**Table 1 testing results of nanocomposite produced by embodiments and comparisons (Data in Table 1 was tested by the national standard test method).**

| | Tensile strength /MPa | Breaking elongation rate/% | 100% tensile stress at a given elongation /MPa | Tanδ at 0°C | Tanδ at 60°C |
|---|---|---|---|---|---|
| Embodiments 1 | 11.2 | 340 | 2.8 | 0.451 | 0.256 |
| Embodiments 2 | 10.9 | 332 | 3.1 | 0.667 | 0.114 |
| Embodiments 3 | 11.6 | 352 | 3.0 | 0.808 | 0.107 |
| Embodiments 4 | 12.3 | 305 | 3.6 | 0.861 | 0.094 |
| Embodiments 5 | 12.1 | 336 | 3.7 | 0.762 | 0.082 |
| Comparison 1 | 8.9 | 560 | 1.3 | 0.421 | 0.305 |
| Comparison 2 | 8.7 | 502 | 1.5 | 0.634 | 0.185 |
| Comparison 3 | 9.4 | 538 | 1.3 | 0.398 | 0.147 |
| Comparison 4 | 10.6 | 457 | 1.9 | 0.460 | 0.128 |
| Comparison 5 | 9.2 | 424 | 2.3 | 0.381 | 0.097 |
| Comparison 6 | 11.1 | 401 | 1.9 | 0.521 | 0.126 |

As is shown in table 1, silica/poly (itaconate-ter-isoprene-ter-glycidyl methacrylate) nanocomposite produced by the present disclosure has better mechanical properties. Compared with nanocomposites without adding glycidyl methacrylate, it has higher tensile strength and modulus. In rubber area, Tanδ at 0°C reflects wet-skid resistance performance, and Tanδ at 60°C reflects rolling resistance of the tire. By adding glycidyl methacrylate, the wet-skied resistance of nanocomposite is improved while at the same time its rolling resistance is lower. The manufacturing process of the present disclosure can be finished without silane coupling agent, manufacture process is simple and no VOC emission. Thus, it is a kind of promising "green tire" rubber material.

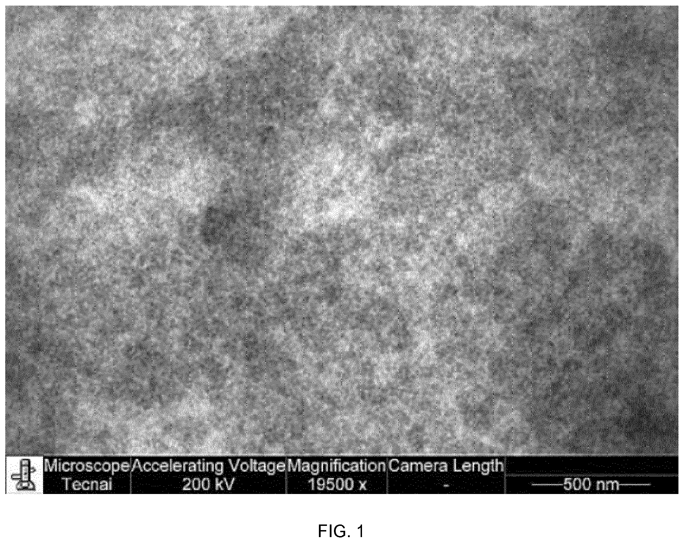

## Claims

1. A method of preparing bio-based elastomer composite comprising of silica and poly itaconate-ter-isoprene-ter-glycidyl methacrylate, the method comprising:
A: preparing bio-based elastomer poly itaconate-ter-isoprene-ter-glycidyl methacrylate by performing:
mixing
at least 30 wt.% itaconate, at least 10 wt.% isoprene, and 0.5 to 20 wt.% glycidyl methacrylate,
wherein the itaconate, isoprene and glycidyl methacrylate are monomers, and a total wt. of the itaconate, isoprene and glycidyl methacrylate is 100%,
adding deionized water with 50-500% wt. of the total monomers as a dispersant,
adding 0.5 to 10% an emulsifier, 0 to 5% a chelating agent, 0.01 to 5% a first reductant, 0.01 to 5% a second reductant, and 0.01 to 5% an initiator,
performing reaction for 6 to 72 hours under 5 to 30°C to obtain an emulsion of the poly itaconate-ter-isoprene-ter-glycidyl methacrylate,
after demulsification and desiccation by flocculant, obtaining a flocculent gel of the poly itaconate-ter-isoprene-ter-glycidyl methacrylate,
placing the flocculent gel in ethanol and water successively to purify the flocculent gel,
drying the flocculent gel for 24 hours in an air-circulating oven at 60°C to obtain the bio-based elastomer comprising poly itaconate-ter-isoprene-ter-glycidyl methacrylate, wherein the emulsifier comprises at least one of potassium oleate, sodium oleate, disproportionated potassium rosin, disproportionated rosin sodium, sodium dodecyl sulfonate, sodium dodecyl benzene sulfonate, lauryl sodium sulfate, or ammonium nonylphenol polyoxyethylene ether sulfate (CO436), the first reductant is EDTA-FeNa or ferrous sulfate, the second reductant is sodium formaldehyde sulfoxylate or polyvinyl polyamide, the chelating agent comprises EDTA-2Na, EDTA-4Na, and EDTA-Fe·Na, the initiator comprises tert-butyl hydroperoxide dicumyl peroxide or p-menthane hydroperoxide (PMHP), flocculant comprises calcium chloride water solution with mass concentration of 1 to 10%, 1 to 10% sodium chloride water solution, 1 to 5% hydrochloric acid water solution, 1 to 5% sulfuric acid water solution, ethanol, or methanol; and
B: preparing the bio-based elastomer composite comprising silica and poly itaconate-ter-isoprene-ter-glycidyl methacrylate by:
mixing 100 phr of the bio-based elastomer comprising poly itaconate-ter-isoprene-ter-glycidyl methacrylate with over 10 phr of silica, 0.5 to 3.0 phr of Sulphur, 0.5 to 3.0 phr of anti-ager, 0.5 to 10.0 phr of ZnO, 0.5 to 5 phr of stearic acid, 0.5 to 5 phr of accelerator, and 0 to 30 phr of fillers through an open mill or internal mixer and molding at 130 to 170°C, the silica is highly dispersed silica, optionally VN3 or 833MP, the anti-ager comprises antioxidant, optionally antioxidant N-isopropyl-N'-phenyl-p-phenylenediamine (4010NA) and antioxidant N-(1,2-dimethylbutyl)-n-phenyl-p-phenylenediamine (4020), the accelerator comprises accelerator, optionally 2-mercaptobenzothiazole (accelerator M) and N-cyclohexyl-2-benzothiazole sulfonamide (accelerator CZ), the fillers comprises a filler, optionally paraffin and distillate aromatic extract (DAE).

2. The method of claim 1, wherein the itaconate, optionally, comprises dimethyl itaconate, diethyl itaconate, dipropyl itaconate, diisopropyl itaconate, dibutyl itaconate, diisobutyl itaconate, dipentyl itaconate, diisoamyl itaconate, dihexyl itaconate, diheptyl phthalate itaconate and dioctyl phthalate itaconate.

## Patentansprüche

1. Verfahren zur Herstellung von bio-basiertem Elastomerverbund, umfassend Silica und Polyitaconat-ter-Isopren-ter-Glycidylmethacrylat, wobei das Verfahren Folgendes umfasst:
A: Herstellung von biobasiertem Elastomer Polyitaconat-ter-Isopren-ter-Glycidylmethacrylat durch Ausführen von:
Mischen
von mindestens 30 Gew.-% Itaconat, mindestens 10 Gew.-% Isopren und 0,5 bis 20 Gew.-% Glycidylmethacrylat,
wobei das Itaconat, Isopren und Glycidylmethacrylat Monomere sind und ein Gesamtgewicht des Itaconats, Isoprens und Glycidylmethacrylats 100 % ist,
Zugeben von entionisiertem Wasser mit 50 bis 500 Gew.-% der gesamten Monomere as ein Dispergiermittel,
Zugeben von 0,5 bis 10 % eines Emulgators, 0 bis 5 % eines Chelatbildners, 0,01 bis 5 % eines ersten Reduktionsmittels, 0,01 bis 5 % eines zweiten Reduktionsmittels und 0,01 bis 5 % eines Initiators,
Durchführen einer Reaktion 6 bis 72 Stunden lang bei 5 bis 30 C, um eine Emulsion des Polyitaconat-ter-Isopren-ter-Glycidylmethacrylats zu erhalten,
nach Emulsionsspaltung und Trocknung durch Flockungsmittel Erhalten eines Flockungsmittelgels des Polyitaconat-ter-Isopren-ter-Gylcidylmethacrylats,
Platzieren des Flockungsmittelgels in Ethanol und Wasser nacheinander, um den Flockungsmittelgel zu reinigen,
Trocknen des Flockungsmittelgels 24 Stunden lang in einem Ofen mit Luftzirkulation bei 60 C, um das biobasierte Elastomer zu erhalten, das Polyitaconat-ter-Isopren-ter-Glycidylmethacrylat umfasst, wobei der Emulgator mindestens eins von Kaliumoleat, Natriumoleat, disproportioniertem Kaliumharz, disproportioniertem Harznatrium, Natriumdodecylsulfonat, Natriumdodecylbenzolsulfonat, Laurylnatriumsulfat oder Ammoniumnonylphenol-Polyoxyethylenethersufalt (CO436) umfasst, das erste Reduktionsmittel EDTA-FeNa oder Eisensulfat ist, das zweite Reduktionsmittel Natriumformaldehydsulfoxylat oder Polyvinylpolyamid ist, das Geliermittel EDTA-2Na, EDTA-4Na und EDTA-Fe-Na umfasst, der Initiator tert-Butylhydroperoxid-Dicumylperoxid oder p-Menthanhydroperoxid (PMHP) umfasst, das Flockungsmittel Kalziumchloridwasserlösung mit einer Massenkonzentration von 1 bis 10 %, 1 bis 10 % Natriumchloridwasserlösung, 1 bis 5 % Chlorwasserstoffsäurelösung, 1 bis 5 % Schwefelsäurewasserlösung, Ethanol oder Methanol umfasst; und
B: Herstellen des biobasierten Elastomerverbunds, der Silika und Polyitaconat-ter-Isopren-ter-Glycidylmethacrylat umfasst, durch:
Mischen 100 phr des biobasierten Elastomers, umfassend Polyitaconat-ter-Isopren-ter-Glycidylmethacrylat mit mehr als 10 phr Silika, 0,5 bis 3,0 phr Schwefel, 0,5 bis 3,0 phr Alterungsschutzmittel, 0,5 bis 10,0 phr ZnO, 0,5 bis 5 phr Stearinsäure, 0,5 bis 5 phr Beschleuniger und 0 bis 30 phr Füllstoffe durch eine offene Mühle oder einen internen Mischer und Gießen bei 130 bis 170 C, die Silika ist stark dispergierte Silika, wahlweise VN3 oder 833MP, das Alterungsschutzmittel umfasst ein Antioxidationsmittel, wahlweise Antioxidationsmittel N-Isopropyl-N'-phenyl-p-phenylendiamin (4010NA) und Antioxidationsmittel N-(1,2-Dimethylbutyl)-n-Phenyl-p-Phenylendiamin (4020), der Beschleuniger umfasst Beschleuniger, wahlweise 2-Mercaptobenzothiazol (Beschleuniger M) und N-Cyclohexyl-2-Benzothiazol-Sulfonamid (Beschleuniger CZ), die Füllstoffe umfassen einen Füller, wahlweise Paraffin und Distillat-Aromatenextrakt (DAE).

2. Verfahren von Anspruch 1, wobei das Itaconat wahlweise Dimethylitaconat, Diethylitaconat, Dipropylitaconat, Diisopropylitaconat, Dibutylitaconat, Diisobutylitaconat, Dipentylitaconat, Diisoamylitaconat, Dihexylitaconat, Diheptylphthalat-itaconat und Dioctylphthalatitaconat umfasst.

## Revendications

1. Procédé de préparation d'un composite élastomère à base biologique comprenant de la silice et un poly itaconate-ter-isoprène-ter-glycidyl méthacrylate, le procédé comprenant les étapes consistant à :
A : préparer l'élastomère à base biologique poly itaconate-ter-isoprène-ter-glycidyl méthacrylate en effectuant :
un mélange
au moins 30 % en poids d'itaconate, au moins 10 % en poids d'isoprène et 0,5 à 20 % en poids de glycidyl méthacrylate,
l'itaconate, l'isoprène et le glycidyl méthacrylate étant des monomères, et un total en poids de l'itaconate, de l'isoprène et du glycidyl méthacrylate étant de 100 %,
ajouter de l'eau déminéralisée avec 50 à 500 % en poids des monomères totaux comme dispersant,
ajouter 0,5 à 10 % d'un émulsifiant, 0 à 5 % d'un agent chélateur, 0,01 à 5 % d'un premier réducteur, 0,01 à 5 % d'un second réducteur et 0,01 à 5 % d'un initiateur,
effectuer la réaction durant 6 à 72 heures sous 5 à 30 °C pour obtenir une émulsion du poly itaconate-ter-isoprène-ter-glycidyl méthacrylate,
après démulsification et dessication par un floculant, obtenir un gel floculant du poly itaconate-ter- isoprène-ter-glycidyl méthacrylate,
placer le gel floculant dans de l'éthanol et de l'eau successivement pour purifier le gel floculant,
sécher le gel floculant durant 24 heures dans un four à circulation d'air à 60 °C pour obtenir l'élastomère à base biologique comprenant le poly itaconate-ter-isoprène-ter-glycidyl méthacrylate, l'émulsifiant comprenant au moins un de l'oléate de potassium, de l'oléate de sodium, de la rosine de potassium disproportionnée, de la rosine de sodium disproportionnée , du sodium dodécyl sulfonate, du sodium dodécyl benzène sulfonate, du lauryl sodium sulfate ou de l'ammonium nonylphénol polyoxyéthylène éther sulfate (CO436), le premier réducteur est l'EDTA-FeNa ou le sulfate ferreux, le second réducteur est le sodium formaldéhyde sulfoxylate ou le polyvinyl polyamide, l'agent chélateur comprend l'EDTA-2Na, l'EDTA-4Na et l'EDTA Fe-Na, l'initiateur comprend le tert-butyl hydroperoxyde dicumyl peroxyde ou le p-menthane hydroperoxyde (PMHP), le floculant comprend une solution aqueuse de chlorure de calcium avec une concentration en masse de 1 à 10 %, une solution aqueuse de chlorure de sodium de 1 à 10 %, une solution aqueuse d'acide chlorhydrique à 1 à 5%, une solution aqueuse d'acide sulfurique à 1 à 5 %, del'éthanol ou du méthanol ; et
B : préparer le composite élastomère à base biologique comprenant du poly itaconate-ter-isoprène-ter-glycidyl méthacrylate en :
mélangeant 100 phr de l'élastomère à base biologique comprenant du poly itaconate-ter-isoprène-ter-glycidyl méthacrylate avec plus de 10 phr de silice, 0,5 à 3,0 phr de soufre, 0,5 à 3,0 phr d'anti-ager, 0,5 à 10,0 phr de ZnO, 0,5 à 5 phr d'acide stéarique, 0,5 à 5 phr d'un accélérateur, et 0 à 30 phr de charges par un moulin ouvert ou un mélangeur interne et le moulage à 130 à 170 °C, la silice est de la silice hautement dispersée, éventuellement VN3 ou 833MP, l'anti-ager comprend un antioxydant, éventuellement l'antioxydant N-isopropyl-N'-phényl-p-phénylènediamine (4010NA) et l'antioxydant N-(1,2-diméthylbutyl)-n-phényl-p-phénylènediamine (4020), l'accélérateur comprend un accélérateur, éventuellement le 2-mercaptobenzothiazole (accélérateur M) et le N-cyclohexyl-2-benzothiazole sulfonamide (accélérateur CZ), les charges comprennent une charge, éventuellement de la paraffine et un extrait aromatique distillé (DAE).

2. Procédé selon la revendication 1, l'itaconate, éventuellement, comprenant le diméthyl itaconate, le diéthyl itaconate, le dipropyl itaconate, le diisopropyl itaconate, le dibutyl itaconate, le diisobutyl itaconate, le dipentyl itaconate, le diisoamyl itaconate, le dihexyl itaconate, le diheptyl phtalate itaconate et le dioctyl phtalate itaconate.
